# FASCICULE DE BREVET EUROPEEN

(11) **EP 0 466 864 B1**
(45) Date de publication et mention de la délivrance du brevet: **28.06.1995**
(21) Numéro de dépôt: 91902980.1
(22) Date de dépôt: 07.02.1991
(51) Int. Cl.: A61C 17/40

(54) **APPAREIL D'HYGIENE BUCCALE**
ORALE HYGIENEVORRICHTUNG
ORAL HYGIENE DEVICE

(30) Priorité: 09.02.1990 CH 425/90
(43) Date de publication de la demande: 22.01.1992
(73) Titulaire: TRISA BÜRSTENFABRIK AG TRIENGEN, CH-6234 Triengen (CH)
(72) Inventeur: Kaeser, Charles, CH-1073 Savigny (CH)
(74) Mandataire: Patentanwälte Schaad, Balass, Menzl & Partner AG
(86) Numéro de dépôt international: CH9100032
(87) Numéro de publication internationale: WO9111971

(56) Documents cités:
- DE-U- 8 535 358
- GB-A- 2 071 498
- US-A- 3 588 936
- US-A- 3 703 170
- US-A- 4 397 055

## Description

La présente invention concerne un appareil d'hygiène buccale comportant un corps allongé conformé de façon à servir d'organe de préhension et muni à une de ses extrémités de moyens de fixation destinés à accoupler de façon amovible soit un premier embout échangeable, mobile par rapport audit corps et agencé comme élément brosse soit un second embout échangeable, fixe par rapport au corps et constitué par une canule, l'appareil comprenant un dispositif d'entraînement logé dans le corps, destiné à entraîner le premier embout et comportant un moteur qui entraîne par l'intermédiaire d'un mécanisme d'entraînement une pièce support, sur laquelle le premier embout est montable de façon amovible, et une pompe destinée à émettre un jet d'eau à travers le second embout lorsque ce dernier est monté sur le corps.

On connaît déjà des brosses à dents dites électriques qui comportent un corps dans lequel est logé un petit moteur électrique, entraînant un mécanisme agencé pour transformer le mouvement circulaire de l'axe du moteur en un mouvement de va-et-vient appliqué à la brosse proprement dite. Ce mouvement a généralement une très faible amplitude de l'ordre de 1 mm. Or du fait que les soies qui constituent la brosse sont souples, et en raison de la faible amplitude du mouvement, l'extrémité active de la brosse, à savoir les extrémités des soies de cette brosse vibrent, mais ne se déplacent pas. Le brossage est donc quasi inexistant.

Ces appareils sont habituellement alimentés en basse tension au moyen d'un cordon raccordé à un transformateur lui-même connecté à une prise de courant électrique, ce qui constitue une contrainte gênante pour l'utilisateur, notamment lorsqu'il est en déplacement.

Parallèlement à ces appareils, il existe des dispositifs à jet pulsé destinés à produire un jet d'eau sous haute pression en vue d'assurer à la fin un rinçage des dents et un massage des gencives.

Du document DE-U-85 35 358 on connaît un appareil d'hygiène buccale dans lequel un dispositif d'entraînement actionne des brosses et une pompe. Pour enclencher, respectivement déclencher à choix les brosses ou la pompe, on propose dans ce document en page 5, avant-dernier paragraphe, de prévoir un dispositif de commutation mécanique. L'adjonction d'un tel dispositif de commutation augmente considérablement la complexité mécanique de l'appareil.

Le document GB-A-2 071 498 décrit un appareil d'hygiène buccale correspondant au préambule de la revendication 1 et comportant une poignée munie d'un élément de fixation sur lequel peut être fixé soit un élément brosse soit une canule. La poignée est reliée par l'intermédiaire d'un conduit à un réservoir d'eau séparé de la poignée. Un moteur est agencé dans cette dernière et actionne grâce a des organes de transmission la brosse suivant un mouvement alternatif. Une pompe avec un moteur d'entraînement associé est contenu dans le réservoir d'eau. Un commutateur agencé dans la poignée permet d'arrêter le moteur de la brosse et d'enclencher celui de la pompe lorsqu'on fixe la canule.

L'appareil selon l'invention comprend en plus les caractéristiques définies dans la partie caractérisante de la revendication 1.

Le piston de la pompe est ainsi relié à un seul dispositif d'entraînement et entraîné de façon permanente. Lors du montage du premier embout échangeable agencé comme élément brosse, la pompe est automatiquement désactivée et aucun jet d'eau n'est produit.

Selon une forme de réalisation préférée, le piston est à mouvement alternatif suivant un axe longitudinal actionné par ledit moteur par l'intermédiaire dudit mécanisme d'entraînement, et il est agencé pour engendrer un jet d'eau sous pression à chaque cycle de ce même mécanisme d'entraînement.

De préférence, le mécanisme d'entraînement comprend un organe exentrique relié par des engrenages au moteur et une came solidaire du piston, l'organe exentrique comportant un axe de rotation perpendiculaire audit axe longitudinal et étant engagé dans une cavité ménagée à l'intérieur de cette came, cette dernière étant agencée pour être mobile selon un mouvement linéaire suivant ledit axe longitudinal et pivotant autour de cet axe longitudinal.

Avantageusement, l'organe exentrique comprend une première partie agencée de façon à produire ledit mouvement alternatif du piston suivant l'axe longitudinal et une seconde partie agencée de façon à produire le mouvement pivotant du piston autour de cet axe longitudinal, ladite pièce de support étant solidaire d'une extrémité du pis-ton.

Favorablement, le piston est logé dans une chambre cylindrique alimentée en eau à travers un clapet d'entrée.

De façon avantageuse, le piston porte en tant que pièce support une tige agencée pour maintenir ledit premier embout portant une brosse à dent. Dans cette forme de réalisation, le mécanisme d'entraînement est agencé de façon que le piston présente une course comprise entre 1 et 10 mm et de préférence au moins approximativement égale à 4 mm.

L'extrémité dudit second embout peut être agencée pour obturer l'extrémité antérieure du corps et pour mettre en communication la pompe avec um canal axial ménagé à l'intérieur de ce second embout à travers un clapet de sortie.

L'extrémité dudit premier embout peut être agencée pour ménager une lumière entre le corps et ladite extrémité de ce premier embout de façon à désamorcer la pompe lorsque ce premier embout est monté sur l'appareil.

L'extrémité dudit embout mobile peut être agencée pour ménager une lumière entre le corps et ladite extrémité de cet embout pour désamorcer la pompe.

Selon une forme de réalisation particulièrement avantageuse, l'alimentation électrique du moteur est effectuée par des batteries rechargeables au moyen d'un chargeur à pots ferrites.

Dans une première forme de réalisation particulièrement avantageuse, la pompe peut être alimentée en eau par l'intermédiaire d'un conduit souple couplé à une source d'eau étant ou non sous pression.

Selon une seconde forme de réalisation avantageuse, la pompe peut être alimentée en eau par l'intermédiaire d'un réservoir logé dans le corps de l'appareil.

La présente invention sera mieux comprise en référence a la description d'un exemple de réalisation et du dessin annexé dans lequel :
la figure 1 représente une vue en coupe axiale de l'appareil selon l'invention équipé d'un embout fixe,
la figure 2 représente une vue partielle en coupe axiale agrandie de l'extrémité du corps de l'appareil portant un embout mobile, et
la figure 3 représente une vue en coupe transversale représentant le mécanisme d'entraînement.

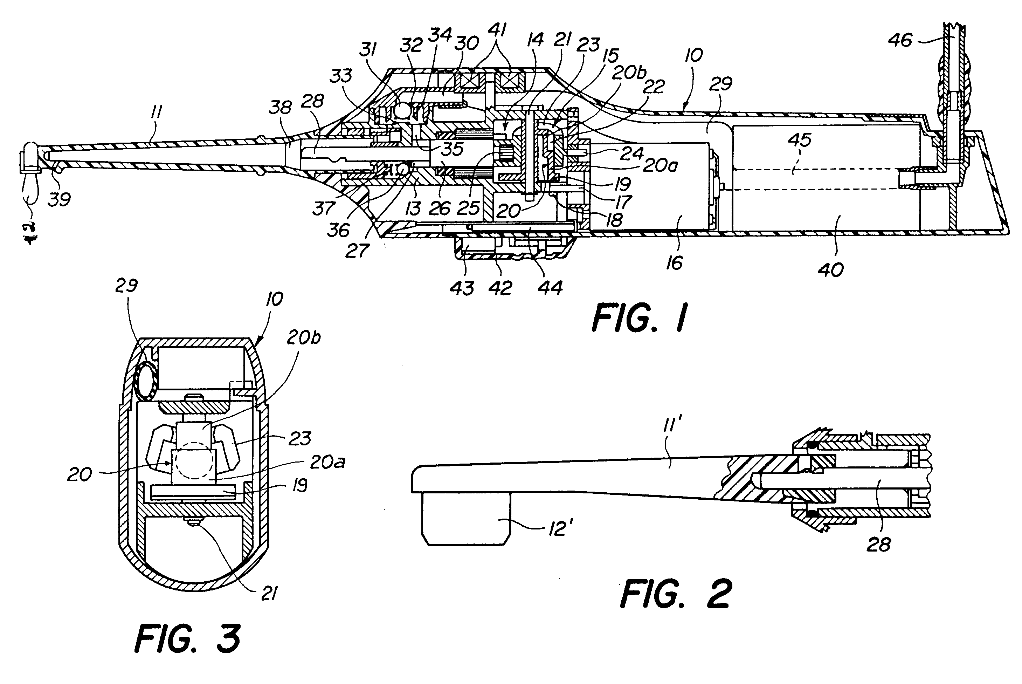

En référence à la figure 1, l'appareil d'hygiène buccale tel que représenté par les figures comprend un corps 10 allongé dont une extrémité est équipée d'un embout fixe 11 qui constitue une canule creuse destinée à émettre un jet d'eau pulsé. A l'intérieur de ce corps est monté un support 13 en matière synthétique moulée qui définit un logement 14 dans lequel est monté un mécanisme 15 d'entraînement d'un embout mobile 11'. Ce mécanisme 15, qui sera décrit ci-dessous, est entraîné par un moteur électrique 16 qui est logé dans l'extrémité du corps opposée à celle qui porte ledit embout. Ce moteur 16 comporte un axe de sortie 17 sur lequel est monté un pignon d'entraînement 18. Ce pignon d' entraînement est en prise avec une couronne dentée 19 solidaire d'un organe excentrique 20 agencé pour tourner autour d'un axe fixe 21. L' excentrique 20 est engagé à l'intérieur d'un évidemment central 22 d'une came 23 solidaire sur un côté d'un embout 24 sensiblement perpendiculaire à l'axe 21 de l'organe excentrique 20 et du côté opposé d'un bouton moleté 25 qui est centré sur le même axe que l'embout 24. Ce bouton moleté 25 est lié à un élément cylindrique 26 agencé pour coulisser axialement et pour pivoter sur son axe a l'intérieur d'un logement également cylindrique 27, et qui constitue le piston d'une pompe destinée à engendrer le jet pulsé.

L'organe excentrique 20 se compose de deux éléments respectivement 20a et 20b qui ont pour but d'engendrer le mouvement du mécanisme d' entraînement de l'embout mobile, et le mouvement du piston de la pompe. La partie 20a de cet excentrique est responsable du déplacement linéaire alternatif de la came 23 le long de l'axe commun de l'embout 24 et du bouton 25, et la partie supérieure 20b de l'excentrique est responsable du mouvement de pivotement alternatif de cette came 23 autour de ce même axe. Ce mécanisme est illustré plus en détail par la figure 3. Ce mouvement, à la fois alternatif linéaire et alternatif pivotant, respectivement le long et autour du même axe, se transmet au piston 26 et à une tige 28 qui sert à la fois à guider le piston dans son déplacement linéaire et pivotant et à porter ledit embout mobile 11'. On comprend aisément que la brosse 12 qui est portée par cet embout mobile 11' constituant en réalité le manche de la brosse soit animée d'un mouvement de déplacement axial combiné à un mouvement de pivotement autour de cet axe.

La pompe est alimentée en eau par un conduit 29 qui aboutit dans un canal 30 dont la sortie peut être obturée par une bille 31 sollicitée contre un siège 32 par un ressort 33. Cette bille et le ressort, qui constituent un clapet d'entrée, sont logés dans une chambre 34 qui communique avec un canal radial 35 débouchant dans la chambre 27 du piston 26. Une deuxième bille 36 associée à un ressort 37 constitue un clapet de sortie de la chambre 27 et permet la communication de cette chambre avec le canal 38 intérieur à l'embout fixe 11. Cet embout fixe comporte à son extrémité libre un petit conduit 39 de faible section, qui permet d'engendrer le jet sous pression pour chaque cycle du mécanisme d'entraînement de la pompe. On notera que dans le cas où l'embout est fixe, son extrémité n'est pas en contact avec la tige 28 qui se déplace alternativement à l'intérieur du canal 38.

Dans le cas où l'embout mobile 11' est monté sur le corps, celui-ci a une forme appropriée de manière à pouvoir être adapté sur la tige 28. Son extrémité présente une forme telle qu'il subsiste une lumière entre elle et le corps de l'appareil, ce qui a pour effet de désamorcer la pompe. Dans cette réalisation, la brosse 12' portée par l' embout est animée d'un mouvement linéaire et d'un mouvement pivotant, mais la pompe n'engendre aucun jet pulsé.

On pourrait imaginer de combiner jet pulsé et brosse dans le même appareil, mais une telle réalisation imposerait le déplacement du clapet de sortie à li extrémité de l' embout 11' qui devrait être pourvu d'un canal intérieur, et l'obturation de la lumière de désamorçage de la pompe.

Le moteur est alimenté par plusieurs accumulateurs 40, logés dans la partie du corps disposée à l'extrémité opposée aux embouts. La charge de ces batteries se fait de préférence au moyen d' un chargeur à induction comportant des pots ferrites 41 tels que ceux commercialisés par Philips® ou d'autres entreprises, et qui ont un excellent rendement. Les éléments complémentaires du chargeur sont montés dans un socle non représenté.

La commande s'effectue au moyen d'un interrupteur coulissant 42 contenant un aimant permanent 43 qui agit sur deux ampoules contenant des micro interrupteurs 44 à enclenchement magnétique. On prévoit avantageusement trois positions qui sont la position zéro correspondant à l'arrêt, et deux pointes correspondant à deux vitesses de fonctionnement.

Différentes modifications peuvent être envisagées dans l'agencement intérieur des composants, et particulièrement en ce qui concerne par exemple l'alimentation en eau de la pompe. Cette alimentation peut se faire par connexion d'un conduit intérieur souple 45 relié à la pompe par un conduit extérieur 46 couplé soit à un réservoir mobile, soit à un réservoir fixe, soit à une prise d'eau courante (non représentés). La pompe peut également être alimentée par l'intermédiaire d'un réservoir logé dans le corps de l'appareil.

## Revendications

1. Appareil d'hygiène buccale comportant un corps (10) allongé conformé de façon à servir d'organe de préhension et muni à une de ses extrémités de moyens de fixation destinés à accoupler de façon amovible soit un premier embout (11',12') échangeable, mobile par rapport audit corps (10) et agencé comme élément brosse soit un second embout (11) échangeable, fixe par rapport au corps (10) et constitué par une canule, l'appareil comprenant un dispositif d'entraînement (15,16) logé dans le corps (10), destiné à entraîner le premier embout (11',12') et comportant un moteur (16) qui entraîne par l'intermédiaire d'un mécanisme d'entraînement (15) une pièce support (28), sur laquelle le premier embout (11', 12') est montable de façon amovible, et une pompe (26,27) destinée à émettre un jet d'eau à travers le second embout (11) lorsque ce dernier est monté sur le corps (10), caractérisé en ce que la pompe (26,27) est disposée à l'intérieur du corps (10) et comprend un piston de pompage (26) relié de façon permanente audit dispositif d'entraînement (15,16), la pompe (25,26) étant rendue inopérante lorsque le premier embout (11',12') est monté sur l'appareil.

2. Appareil selon la revendication 1, caractérisé en ce que le piston (26) est à mouvement alternatif suivant un axe longitudinal actionné par ledit moteur (16) par l'intermédiaire dudit mécanisme d'entraînement (15), et en ce qu'il est agencé pour engendrer un jet d'eau sous pression à chaque cycle de ce même mécanisme d'entraînement.

3. Appareil selon la revendication 2, caractérisé en ce que le mécanisme d'entraînement (15) comprend un organe excentrique (20) relié par des engrenages (18,19) au moteur (16) et une came (23) solidaire du piston (26), l'organe excentrique (20) comportant un axe de rotation (21) perpendiculaire audit axe longitudinal et étant engagé dans une cavité ménagée à l'intérieur de cette came (23), cette dernière étant agencée pour être mobile selon un mouvement linéaire suivant ledit axe longitudinal et pivotant autour de cet axe longitudinal.

4. Appareil selon la revendication 3, caractérisé en ce que l'organe excentrique (20) comprend une première partie (20a) agencée de façon à produire ledit mouvement alternatif du piston (26) suivant l'axe longitudinal et une seconde partie (20b) agencée de façon à produire le mouvement pivotant du piston (26) autour de cet axe longitudi nal, ladite pièce de support (28) étant solidaire d'une extrémité du piston (26).

5. Appareil selon l'une des revendications précédentes, caractérisé en ce que le piston (26) est logé dans une chambre cylindrique (27) alimentée en eau à travers un clapet d'entrée (31).

6. Appareil selon l'une des revendications précédentes, caractérisé en ce que le piston (26) porte en tant que pièce support une tige (28) agencée pour maintenir ledit premier embout (11',12') portant une brosse à dent (12).

7. Appareil selon la revendication 3, caractérisé en ce que le mécanisme d'entraînement (15) est agencé de façon que le piston (26) présente une course comprise entre 1 et 10 mm et de préférence au moins approximativement égale à 4 mm.

8. Appareil selon l'une des revendications précédentes, caractérisé en ce que l'extrémité dudit second embout (11) est agencée pour obturer l'extrémité antérieure du corps (10) et pour mettre en communication la pompe avec un canal axial (38) ménagé à l'intérieur de ce second embout à travers un clapet de sortie (36).

9. Appareil selon l'une des revendications précédentes, caractérisé en ce que l'extrémité dudit premier embout (11',12') est agencée pour ménager une lumière entre le corps (10) et ladite extrémité de ce premier embout de façon à désamorcer la pompe lorsque ce premier embout est monté sur l'appareil.

10. Appareil selon la revendication 1, caractérisé en ce que l'alimentation électrique du moteur (16) est effectuée par des batteries rechargeables au moyen d'un chargeur à pots ferrites (41).

11. Appareil selon la revendication 1, caractérisé en ce que la pompe (26,27) est alimentée en eau par l'intermédiaire d'un conduit souple (45) couplé à une source d'eau étant ou non sous pression.

12. Appareil selon la revendication 1, caractérisé en ce que la pompe (26,27) est alimentée en eau par l'intermédiaire d'un réservoir logé dans le corps (10).

## Claims

1. An oral hygiene device comprising an elongate body (10) shaped so as to serve as a gripping element and provided at one of its ends with fixing means intended to couple in a detachable manner either a first exchangeable end fitting (11', 12') movable relative to the said body (10) and arranged as a brush element, or a second exchangeable end fitting (11) fixed relative to the body (10) and constituted by a nozzle, the apparatus comprising a drive device (15, 16) accommodated in the body (10), intended to drive the first end fitting (11', 12) and comprising a motor (16) which, by means of a driving mechanism (15), drives a supporting component (28) whereon the first end fitting (11', 12') is mountable in a detachable manner, and a pump (26, 27) intended to emit a jet of water through the second end fitting (11) when the latter is mounted on the body (10), characterized in that the pump (26, 27) is disposed inside the body (10) and comprises a pumping piston (28) permanently connected to the said drive device (15, 16), the pump (25, 26) being rendered inoperative when the first end fitting (11', 12') is mounted on the device.

2. A device according to claim 1, characterized in that the piston (26) has a reciprocating motion along a longitudinal axis, actuated by the said motor (16) by means of the said driving mechanism (15), and in that it is arranged to generate a jet of pressurized water at each cycle of the selfsame driving mechanism.

3. A device according to claim 2, characterized in that the driving mechanism (15) has an eccentric element (20) connected by gear wheels (16, 19) to the motor (16) and a cam (23) joined to the piston (26), the eccentric element (20) having an axis of rotation (21) perpendicular to the said longitudinal axis and being engaged in a cavity arranged inside this cam (23), the latter being arranged so as to be movable in a linear movement along the said longitudinal axis and pivoting around this longitudinal axis.

4. A device according to claim 3, characterized in that the eccentric element (20) has a first part (20a) arranged so as to produce the said reciprocating motion of the piston (26) along the longitudinal axis and a second part (20b) arranged so as to produce the pivoting movement of the piston (26) round this longitudinal axis, the said supporting component (28) being joined to one end of the piston (26).

5. A device according to one of the preceding claims, characterized in that the piston (26) is accommodated in a cylindrical chamber (27) supplied with water through an inlet valve (31).

6. A device according to one of the preceding claims, characterized in that the piston (26) carries as the supporting component, a stem (28) arranged so as to keep the said first end fitting (11', 12'), carrying a toothbrush (12), in position.

7. A device according to claim 3, characterized in that the driving mechanism (15) is arranged so that the piston (26) has a stroke comprised between 1 and 10 mm and preferably at least approximately equal to 4 mm.

8. A device according to one of the preceding claims, characterized in that the end of the said second end fitting (11) is arranged to obturate the front end of the body (10) and to cause the pump to communicate through an outlet valve (36) with an axial duct (38) arranged inside this second end fitting.

9. A device according to one of the preceding claims, characterized in that the end of the said first end fitting (11', 12') is arranged to obtain an opening between the body (10) and the said end of this first end fitting so as to drain the pump when this first end fitting is fitted on the device.

10. A device according to claim 1, characterized in that the electrical supply for the motor (16) is effected by rechargeable batteries by means of a charger with ferrite cups (41).

11. A device according to claim 1, characterized in that the pump (26, 27) is supplied with water by means of a flexible conduit (45) coupled to a source of pressurized or non-pressurized water.

12. A device according to claim 1, characterized in that the pump (26, 27) is supplied with water by means of a reservoir accommodated in the body (10).

## Patentansprüche

1. Orale Hygienevorrichtung mit einem länglichen Körper (10), der derart ausgebildet ist, daß er als Grifforgan dient und an einem seiner Enden mit Befestigungseinrichtungen versehen ist, die zur lösbaren Kopplung dienen, sei es mit einem ersten austauschbaren Einsatz (11', 12'), der gegenüber dem Körper (10) beweglich ist und als Bürstenelement ausgebildet ist, sei es mit einem zweiten austauschbaren Einsatz (11), der gegenüber dem Körper (10) fixiert und durch eine Kanüle gebildet ist, wobei die Vorrichtung eine im Körper (10) angeordnete Antriebseinrichtung (15, 16) besitzt, die zum Antrieb des ersten Einsatzes (11', 12') bestimmt ist und einen Motor (16) besitzt, der mit Hilfe eines Antriebsmechanismus (15) ein Trägerstück (28) antreibt, auf dem der erste Einsatz (11', 12') in lösbarer Weise angeordnet werden kann und die eine Pumpe (26, 27) besitzt, die zur Abgabe eines Wasserstrahles durch den zweiten Einsatz (11) bestimmt ist, wenn letzterer auf den Körper (10) angeordnet ist, dadurch gekennzeichnet, daß die Pumpe (26, 27) im Inneren des Körpers (10) angeordnet ist und einen Pumpenkolben (26) besitzt, der ständig mit der Antriebseinrichtung (15, 16) verbunden ist, wobei die Pumpe (25, 26) außer Betrieb gesetzt wird, wenn der erste Einsatz (11', 12') auf der Vorrichtung angeordnet wird.

2. Vorrichtung nach Anspruch 1, dadurch gekennzeichnet, daß der Kolben (26) entlang einer Längsachse durch den Motor (16) betätigt über den Antriebsmechanismus (15) hin und her beweglich ist und daß er ausgebildet ist, einen Druckwasserstrahl bei jedem Zyklus dieses Antriebsmechanismus zu erzeugen.

3. Vorrichtung nach Anspruch 2, dadurch gekennzeichnet, daß der Antriebsmechanismus (15) ein exzentrisches Organ (20), das über ein Getriebe (18, 19) mit dem Motor (16) verbunden ist, und eine mit dem Kolben (26) fest verbundene Nocke (23) enthält, wobei das exzentrische Organ (20) eine Drehachse (21) senkrecht zur Längsachse aufweist und mit einem Hohlraum, der im Inneren der Nocke (23) eingearbeitet ist, verbunden ist, wobei letztere eine lineare Bewegung entlang der Längsachse und eine Schwenkbewegung um diese Längsachse zuläßt.

4. Vorrichtung nach Anspruch 3, dadurch gekennzeichnet, daß das exzentrische Organ (20) einen ersten Teil (20a) aufweist, der so ausgebildet ist, daß er die Hin- und Herbewegung des Kolbens (26) entlang der Längsachse erzeugt, und einen zweiten Teil (20b) hat, der derart ausgebildet ist, daß er die Schwenkbewegung des Kolbens (26) um diese Längsachse erzeugt, wobei das Trägerstück (28) fest mit einem Ende des Kolbens (26) verbunden ist.

5. Vorrichtung nach einem der vorhergehenden Ansprüche, dadurch gekennzeichnet, daß der Kolben (26) in einer zylindrischen Kammer (27) angeordnet ist, die über ein Eintrittsventil (31) mit Wasser gespeist wird.

6. Vorrichtung nach einem der vorgehenden Ansprüche, dadurch gekennzeichnet, daß der Kolben (26) als Trägerstück eine Stange (28) trägt, die zum Halten des ersten, eine Zahnbürste (12) tragenden Einsatzes (11', 12') ausgebildet ist.

7. Vorrichtung nach Anspruch 3, dadurch gekennzeichnet, daß der Antriebsmechanismus (15) derart ausgebildet ist, daß der Kolben (26) einen Weg zwischen 1 und 10 mm zurücklegt und vorzugsweise wenigstens ungefähr gleich 4 mm.

8. Vorrichtung nach einem der vorhergehenden Ansprüche, dadurch gekennzeichnet, daß das Ende des zweiten Einsatzes (11) ausgebildet ist, um das vordere Ende des Körpers (10) zu verschließen und um die Pumpe mit einem axialen Kanal (38) im Inneren des zweiten Einsatzes über ein Austrittsventil (36) zu verbinden.

9. Vorrichtung nach einem der vorhergehenden Ansprüche, dadurch gekennzeichnet, daß das Ende des ersten Einsatzes (11', 12') ausgebildet ist, um einen Spalt zwischen dem Körper (10) und diesem Ende der ersten Halterung derart zu bilden, daß die Pumpe abgeschaltet wird, wenn der erste Einsatz auf der Vorrichtung angeordnet ist.

10. Vorrichtung nach Anspruch 1, dadurch gekennzeichnet, daß die elektrische Speisung des Motors (16) durch wiederaufladbare Batterien mittels eines Ladegerätes mit Ferrittöpfen (41) erfolgt.

11. Vorrichtung nach Anspruch 1, dadurch gekennzeichnet, daß die Pumpe (26, 27) mit Wasser mit Hilfe einer flexiblen Leitung (45) gespeist wird, die an einer Wasserquelle mit oder ohne Druck angeschlossen ist.

12. Vorrichtung nach Anspruch 1, dadurch gekennzeichnet, das die Pumpe (26, 27) mit Wasser durch ein im Körper (10) angeordnetes Reservoir gespeist wird.
